# EUROPEAN PATENT SPECIFICATION

(11) **EP 0 492 462 B1**
(45) Date of publication and mention of the grant of the patent: **06.03.1996**
(21) Application number: 91121840.2
(22) Date of filing: 19.12.1991
(51) Int. Cl.: H04N 5/21

(54) **Waveform detecting circuit**
Schaltkreis zur Wellenformerkennung
Détecteur de forme d'ondes

(30) Priority: 20.12.1990 JP 404320/90
(43) Date of publication of application: 01.07.1992
(73) Proprietor: SANYO ELECTRIC CO., LTD., Moriguchi-shi, Osaka (JP)
(72) Inventor: Iizuka, Hiroshi, Daito-shi, Osaka-fu (JP); Shirai, Mituzou, Habikino-shi, Osaka-fu (JP)
(74) Representative: Glawe, Delfs, Moll & Partner

(56) References cited:
- EP-A- 0 169 052
- GB-A- 2 085 690
- JP-A-55 093 377
- JP-A-61 234 176
- K.B.Benson, Television Engineering Handbook, 1986, McGraw-Hill, pages 13.138 - 13.141

## Description

### BACKGROUND OF THE INVENTION

### Field of the Invention

The present invention relates generally to a waveform detecting circuit, and more specifically, to a waveform detecting circuit which detects a defect in a video information signal in a video equipment such as a video cassette recorder (hereinafter referred to as VCR).

### Description of the Background Art

Generally, in a video equipment such as a VCR, a video information signal (for example, a luminance signal Y) usually has defects in various bands generated due to different causes, for example, when Y/C separation is performed by circuitry of recording system or noise reduction is conducted by circuitry of reproducing system.

By way of illustrating an example of a defect in such a video information signal, a description will be provided on how a defect in the luminance signal Y is made by a noise reduction circuit for canceling the line noise of the luminance signal Y in circuitry of reproducing system in a VCR.

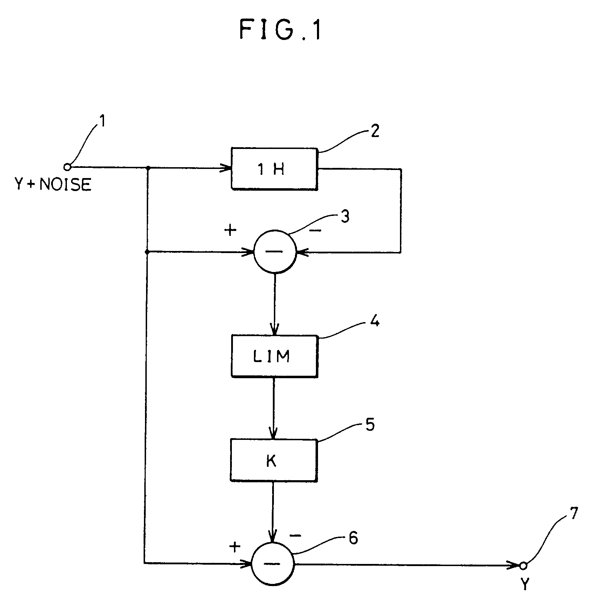

Fig. 1 is a block diagram schematically showing a structure of such a conventional noise reduction circuit in the reproducing system circuitry in a VCR. Referring to Fig. 1, the luminance signal Y including noise components, reproduced from a magnetic tape by a reproduction circuit (not shown), is applied to a 1H delay circuit 2 (H represents one horizontal period) and to the positive inputs of subtractors 3 and 6 through an input terminal 1. The luminance signal containing the noise components delayed by 1H period through 1H delay circuit 2 is applied to the negative input of subtractor 3. Then, subtractor 3 compares two luminance signals of two successive 1H periods and outputs a difference signal corresponding to the noise components. The difference signal has its amplitude limited by a limiter 4, and is increased by K times through a constant multiplying circuit 5 to be applied to the negative input of subtractor 6 as the noise components. Consequently, subtractor 6 subtracts the noise components from the luminance signal including the noise components supplied from the reproduction circuit, and the luminance signal Y whose noise components are canceled is output from an output terminal 7.

However, in the circuit shown in Fig. 1, the output of subtractor 3 contains not only pure noise components but also non-correlative components between luminance signals of successive two lines. Subtraction of such non-correlative components together with the noise components from the luminance signal Y by subtractor 6 results in a defect in the luminance signal Y corresponding to the above-stated non-correlative components. Such a defect in a video information signal degrades the frequency characteristics and S/N ratio in the entire VCR and must therefore be compensated for by some method.

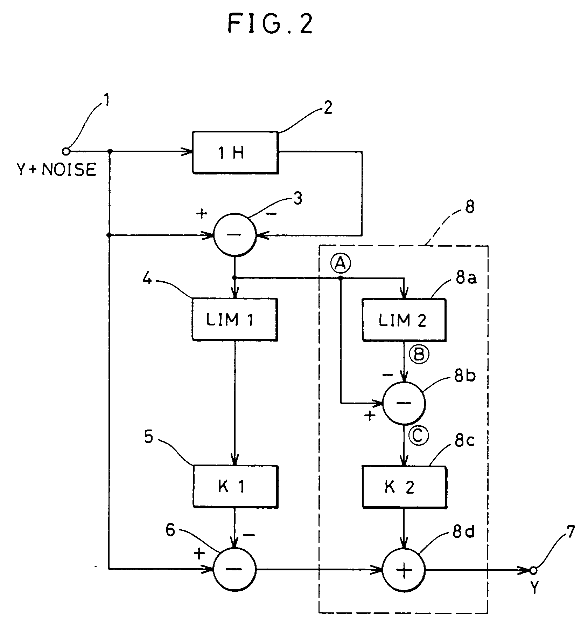

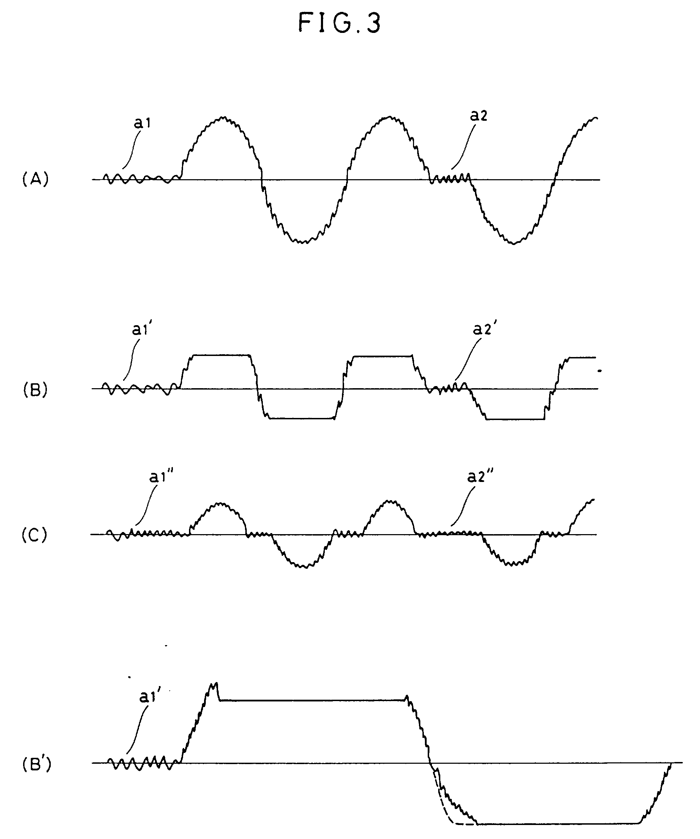

Fig. 2 is a block diagram schematically showing a conventional noise reduction circuit including a waveform correcting circuit for compensating for such a defect in a video information signal, and Fig. 3 is a waveform chart showing signal waveforms corresponding to the respective portions of the circuit shown in Fig. 2. The circuit shown in Fig. 2 is substantially identical to the conventional noise reduction circuit shown in Fig. 1 except for provision of a waveform correcting circuit 8.

More specifically stated, a signal output from subtractor 3 formed of noise components and non-correlative luminance signal components is supplied to limiter 4 as well as to waveform correcting circuit 8. The signal waveform at the input (point A) of waveform correcting circuit 8 is schematically illustrated in Fig. 3 (A). In Fig. 3(A), each of a₁ and a₂ schematically indicates a situation wherein noise components are superimposed in the signal portion not having any change of the luminance signal in the vertical direction to be generated at the edge portion of an image. The input signal is applied to a limiter 8a as well as to the positive input of a subtractor 8b. The signal applied to limiter 8a has its amplitude limited, and the signal substantially consisting of the noise components is extracted to be applied to the negative input of subtractor 8b. The waveform at the negative input (point B) of subtractor 8b is schematically illustrated in Fig. 3 at (B). In Fig. 3(B), each of a₁' and a₂' schematically indicates a situation wherein noise components are superimposed in the same manner as described above.

A waveform output as schematically shown in Fig. 3 (C) is obtained from subtractor 8b, and the output is multiplied by K2 by a constant multiplying circuit 8c to be applied to one input of an adder 8d. The output of subtractor 6 is applied to the other input of adder 8d. The output of adder 8d is supplied to signal processing circuitry of reproduction system in the VCR through an output terminal 7.

Then, from the input signal (Fig. 3(A)) applied to waveform correcting circuit 8 from subtractor 3, the signal (Fig. 3(B)) mainly consisting of the noise components is canceled, and subtractor 8b outputs a signal (Fig. 3(C)) mainly formed of the non-correlative components of the luminance signal. In Fig. 3(c), each of a₁''and a₂'' schematically indicates a situation wherein noise components are superimposed in the same manner as described above.

More specifically, the luminance signal output from subtractor 6 lacking the non-correlative components has been given the non-correlative components. As a result, the luminance signal Y having the noise components removed and having its defect corresponding to the non-correlative components compensated for is output from output terminal 7. In the waveform correcting circuit 8, the above-described limiter 8a and subtractor 8b substantially constitute a signal detecting circuit for detecting a defect corresponding to the non-correlative components.

In waveform correcting circuit 8 in Fig. 2, the input signal at the point A is applied to the negative input of subtractor 8b through limiter 8a while it is applied directly to the positive input of subtractor 8b. A delay is made between the two input signals to subtractor 8b accordingly, thus producing distortion in an output signal from subtractor 8b.

In addition, the noise components a₁''and a₂'' superimposed in the signal portions not having any change of the luminance signal in the vertical direction result in flicker on the reproduced picture.

Also, when a differential limiter circuit is used for limiter 8a, even-numbered order distortion incidental to the principle of the operation of the differential limiter circuit is generated in an output signal. Fig. 3(B') is a waveform chart with a waveform for one cycle in Fig. 3(B) enlarged, and distortion and deformation are seen in the amplitude-limited waveform.

When the output of limiter 8a including such signal distortion is processed at various video signal processing circuits, an adverse effect such as the hue lagging from the original on a reproduced picture, thereby degrading the performance of the VCR.

EP-A-0 169 052 discloses a waveform detecting circuit, comprising an upper part slicing circuit, a lower part slicing circuit, an inverter and an adder.

### SUMMARY OF THE INVENTION

It is therefore a main object of the present invention to provide a waveform detecting circuit capable of preventing the degradation of the picture quality of a reproduced picture due to video information signal distortion in a video equipment.

A waveform detecting circuit according to the present invention comprises the features defined in claim 1.

It is therefore a main advantage brought about by the present invention that deterioration of a video information signal due to signal delay and even-numbered order distortion can be prevented in a waveform correcting circuit.

The foregoing and other objects, features, aspects and advantages of the present invention will become more apparent from the following detailed description of the present invention when taken in conjunction with the " accompanying drawings.

### BRIEF DESCRIPTION OF THE DRAWINGS

Fig. 1 is a block diagram schematically showing a conventional noise reduction circuit;
Fig. 2 is a block diagram schematically showing another conventional noise reduction circuit;
Fig. 3 is a waveform chart for illustrating the operation of the conventional noise reduction circuit shown in Fig. 2;
Fig. 4 is a block diagram showing a noise reduction circuit including a waveform detecting circuit according to one embodiment of the present invention;
Fig. 5 is a waveform chart for illustrating the operation of the embodiment shown in Fig. 4; and
Figs. 6A and 6B are diagrams each showing an equivalent circuit of the waveform detecting circuit shown in Fig. 4 being implemented as an integrated circuit.

### DESCRIPTION OF THE PREFERRED EMBODIMENTS

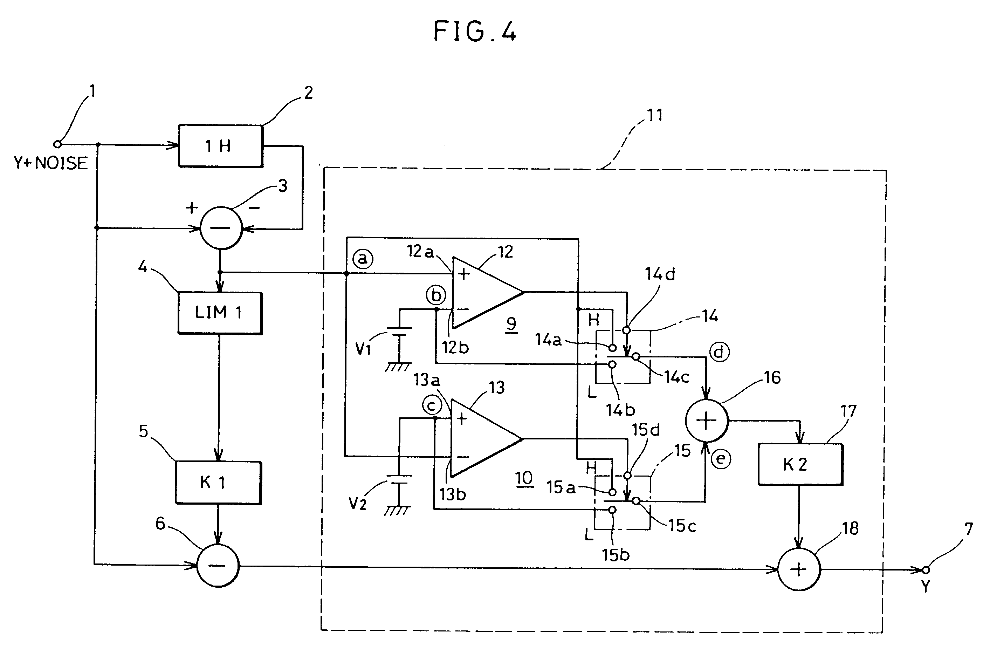

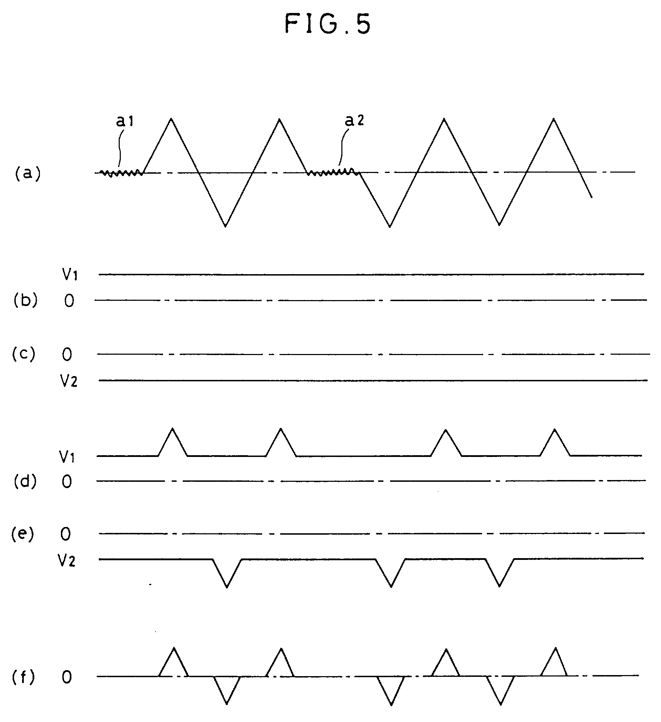

Fig. 4 is a block diagram showing a noise reduction circuit including a waveform detecting circuit according to one embodiment of the present invention. Fig. 5 is a waveform chart showing signal waveforms corresponding to the respective portions of the embodiment shown in Fig. 4.

The circuit shown in Fig. 4 is identical to the conventional noise reduction circuit shown in Fig. 2 except that a waveform correcting circuit 11 is provided in place of waveform correcting circuit 8 in Fig. 2. Therefore, a description will not be repeated on the portions identical to those in the circuit in Fig. 2.

Referring to Fig. 4, a signal output from subtractor 3 formed of noise components and non-correlative luminance components is applied to limiter 4 and waveform correcting circuit 11. More specifically stated, the applied signal is also applied to the positive input 12a of a differential comparator 12, the negative input 13b of a differential comparator 13, one fixed contact 14a of an electronic switch 14, and one fixed contact 15a of an electronic switch 15.

A first reference potential V₁ is applied to the negative input 12b of differential comparator 12 and the other fixed contact 14b of electronic switch 14. A second reference potential V₂ is applied to the positive input 13a of differential comparator 13 and the other fixed contact 15b of electronic switch 15. The first and second reference potentials are opposite from each other in polarity and have absolute values equal to each other.

The output of differential comparator 12 is applied to a control contact 14d of electronic switch 14, and the output of differential comparator 13 is applied to a control contact 15d of electronic switch 15. Electronic switch 14 has its movable contact 14c connected to one input of an adder 16, and electronic switch 15 has its movable contact 15c connected to the other input of adder 16.

The output of adder 16 is multiplied by K2 by a constant multiplying circuit 17 to be applied to one input of an adder 18. The output of subtractor 6 is applied to the other input of adder 18. The output of adder 18 is supplied to the reproduction system signal processing circuitry (not shown) of the VCR through output terminal 7.

Referring to Figs. 4 and 5, the operation of one embodiment according to the present invention will be described. The waveform of an input signal at the input (point a) of waveform correcting circuit 11 is schematically illustrated in Fig. 5(a). The input signal is compared with the first reference potential V₁ (Fig. 5(b)) by differential comparator 12, and differential comparator 12 outputs a control signal at an H level to be applied to the control contact 14d of electronic switch 14 during the period when the input signal is higher than the reference potential V₁. During the period of this control signal being applied, movable contact 14c is connected to fixed contact 14a (H side), and the input signal at the point a is selected to be applied to one input of adder 16 as it is. During the period when the input signal is lower than the reference potential V₁, differential comparator 12 outputs a control signal at an L level to be applied to the control contact 14d of electronic switch 14. During the period of this control signal being applied, movable contact 14c is connected to fixed contact 14b (L side), and the reference potential V₁ is selected to be applied to one input of adder 16. In other words, a signal of a waveform as shown in Fig. 5(d) is output from the fixed contact 14c of electronic switch 14. In Fig. 5(d), noise components indicated by a₁ and a₂ as shown in Fig. 5(a) are completely removed. The circuit formed of differential comparator 12 and electronic switch 14 as stated above will hereinafter be referred to as a first detection circuit 9.

The input signal at the point a is compared with the second reference potential V₂ (Fig. 5(c)) by differential comparator 13, and differential comparator 13 outputs a control signal at H level to be applied to the control contact 15d of electronic switch 15 during the period when the input signal is lower than the reference potential V₂. During the period of this control signal being applied, movable contact 15c is connected to fix contact 15a (H side), and the input signal at the point a is selected to be applied to the other input of adder 16 as it is. During the period when the input signal is higher than the reference potential V₂, differential comparator 13 outputs a control signal at L level to be applied to the control contact 15d of electronic switch 15. During the period of this control signal being applied, movable contact 15c is connected to fixed contact 15b (L side), and the reference potential V₂ is selected to be applied to the other input of adder 16. In other words, a signal of a waveform as shown in Fig. 5(e) is output from the movable contact 15c of electronic switch 15. In Fig. 5(e), noise components indicated by a₁ and a₂ as shown in Fig. 5(a) are completely removed. The circuit formed of differential comparator 13 and electronic switch 15 as stated above will hereinafter be referred to as a second detection circuit 10.

The outputs (Figs. 5(d) and (e)) of first and second detection circuits 9 and 10 are added up at adder 16, and a signal of a waveform as shown in Fig. 5(f) in which the reference potentials V₁ and V₂ are canceled out is output from adder 16. In other words, the signal portion significantly containing the noise components is canceled, a signal substantially constituting of the non-correlative portion of the luminance signal is obtained to be added by adder 18 to the luminance signal lacking the non-correlative components output from subtractor 6. As a result, the luminance signal Y having of the noise components removed and having its defect corrected is output from output terminal 7. Appropriate setting of the values of referential potentials V₁ and V₂ permits the waveforms of the outputs of the first and second detection circuits to be changed, and a signal in a desired range can be extracted as non-relative components.

Accordingly, in the waveform correcting circuit 11, the above described first and second detection circuits as well as the adder 16 constitute a signal detecting circuit for detecting a defect corresponding to the non-correlative components.

In comparison of waveform correcting circuit 11 in Fig. 4 and the conventional waveform correcting circuit 8 in Fig. 2, it is noted that no signal delay is made between a signal through differential comparator 12 and a signal through differential comparator 13 in the circuit in Fig. 4, and, therefore, distortion caused by a signal delay as in the case of the conventional example will not be produced in an output signal from the waveform detecting circuit. No even-numbered order distortion will be generated in an output signal from the waveform detecting circuit, because an electronic switch is used in place of a differential limiter such as limiter 8a in Fig. 2.

In addition, noise components in the signal portion not having any change of the luminance signal in the vertical direction are also removed completely.

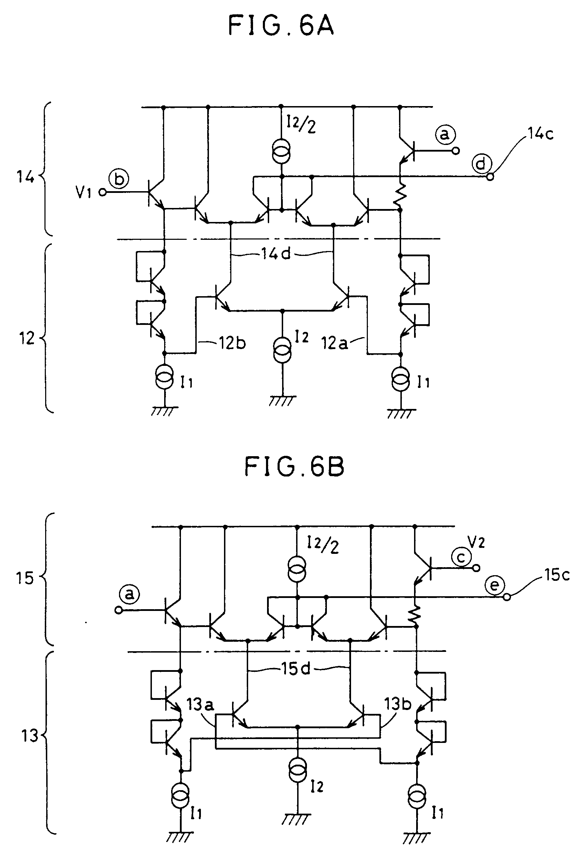

Fig. 6A illustrates an equivalent circuit of first detection circuit 9 in Fig. 4 being implemented as an integrated circuit formed of transistors, resistors and constant current sources, and Fig. 6B illustrates an equivalent circuit of second detection circuit 10 in Fig. 4 being implemented as a similar integrated circuit.

In Fig. 6A, the lower half represents a specific circuit configuration of differential comparator 12, and the upper half represents a specific circuit configuration of electronic switch 14. Differential comparator 12 applies a control signal to the control contact 14d of electronic switch 14 in response to the potential difference between positive input 12a and negative input 12b. Either one of the input signal at the point a or the reference potential V₁ at the point b is selected in response to this control signal, and the selected one is output from movable contact 14c.

In Fig. 6B, the lower half represents a specific circuit configuration of differential comparator 13, and the upper half represents a specific circuit configuration of electronic switch 15. Differential comparator 13 applies a control signal to the control contact 15d of electronic switch 15 in response to the potential difference between positive input 13a and negative input 13b. Either one of the input signal at the point a or the reference potential V₂ at the point c is selected in response to this control signal, and the selected one is output from movable contact 15c.

As stated above, according to the embodiment of the present invention, distortion attributed to the delay of a signal or even-numbered order distortion are not made in an output signal from the waveform detecting circuit, and, therefore, adverse effects such as the hue lagging on a reproduced picture in the VCR can be prevented.

Although in the above-described embodiment, the cases have been described in which the present invention is applied to a noise reduction circuit of reproducing system in a VCR, similar effects can be provided by applying the invention to various circuits in video equipment such as a Y/C separation circuit of recording system in a VCR.

Although the present invention has been described and illustrated in detail, it is clearly understood that the same is by way of illustration and example only and is not to be taken by way of limitation, the scope of the present invention being limited only by the terms of the appended claims.

## Claims

1. A circuit for detecting the waveform of an input signal, comprising:
a first differential comparator (12) having a positive input terminal receiving said input signal and a negative input terminal receiving a first reference potential (V₁) from a first power supply;
a second differential comparator (13) having a negative input terminal receiving said input signal and a positive input terminal receiving a second reference potential (V₂) from a second power supply;
a first electronic switch (14) having a first fixed contact (14a) coupled to receive said input signal and a second fixed contact (14b) coupled to receive said first reference potential, and having a control contact (14d) coupled to receive the output signal of said first differential comparator; said first switch selectively supplying said input signal or said first reference potential;
a second electronic switch (15) having a first fixed contact (15a) coupled to receive said input signal and a second fixed contact (15b) coupled to receive said second reference potential, and having a control contact (15d) coupled to receive the output of said second differential comparator; said second switch selectively supplying said input signal or said second reference potential; and
an adder (16) coupled to output contacts (14c, 15c) of said first and second electronic switches.

2. The waveform detecting circuit according to claim 1, wherein
said first and second reference potentials have positive and negative polarities, respectively, and absolute values equal to each other.

3. The waveform detecting circuit according to claim 1, wherein
said first electronic switch (14) selects said input signal during the period when said input signal is higher than said first reference potential and otherwise selects said first reference potential and,
said second electronic switch (15) selects said input signal during the period when said input signal is lower than said second reference potential and otherwise selects said second reference potential.

## Patentansprüche

1. Schaltkreis zur Signalformerkennung eines Eingangssignals mit:
einem ersten Differenzenkomparator (12) mit einem das Eingangssignal empfangenden positiven Eingangsanschluß und einem ein erstes Referenzpotential (V₁) von einer ersten Stromversorgung empfangenden negativen Eingangsanschluß;
einem zweiten Differenzenkomparator (13) mit einem das Eingangssignal empfangenden negativen Eingangsanschluß und einem ein zweites Referenzpotential (V₂) von einer zweiten Stromversorgung empfangenden positiven Eingangsanschluß;
einem ersten elektronischen Schalter (14) mit einem ersten festen Kontakt (14a), der zum Empfang des Eingangssignals angeschlossen ist, und einem zweiten festen Kontakt (14b), der zum Empfang des ersten Referenzpotentials angeschlossen ist, und mit einem Steuerungskontakt (14d), der zum Empfang des Ausgangssignals des ersten Differenzenkomparators angeschlossen ist, wobei der erste Schalter wahlweise das Eingangssignal oder das erste Referenzpotential abgibt;
einem zweiten elektronischen Schalter (15) mit einem ersten festen Kontakt (15a), der zum Empfang des Eingangssignals angeschlossen ist, und einem zweiten festen Anschluß (15b), der zum Empfang des zweiten Referenzpotentials angeschlossen ist, und einem Steuerungskontakt (15d), der zum Empfang des Ausgangs des zweiten Differenzenkomparators angeschlossen ist, wobei der zweite Schalter wahlweise das Eingangssignal oder das zweite Referenzpotential abgibt; und
einem Addierer (16), der mit den Ausgangsanschlüssen (14c, 15c) des ersten und zweiten elektronischen Schalters verbunden ist.

2. Schaltkreis zur Signalformerkennung nach Anspruch 1, bei dem das erste und zweite Referenzpotential positive bzw. negative Polarität und gleiche Absolutwerte haben.

3. Schaltkreis zur Signalformerkennung nach Anspruch 1, bei dem der erste elektronische Schalter (14) während der Zeitspanne, in der das Eingangssignal höher ist als das erste Referenzpotential, das Eingangssignal und andernfalls das erste Referenzpotential selektiert und,
wobei der zweite elektronische Schalter (15) während der Zeitspanne, in der das Eingangssignal niedriger ist als das zweite Referenzpotential, das Eingangssignal und andernfalls das zweite Referenzpotential selektiert.

## Revendications

1. Circuit de détection de la forme d'onde d'un signal d'entrée comprenant :
un premier comparateur différentiel (12) possédant une borne d'entrée positive recevant ledit signal d'entrée et une borne d'entrée négative recevant un premier potentiel de référence (V₁) issu d'une première alimentation,
un second comparateur différentiel (13) possédant une borne d'entrée négative recevant ledit signal d'entrée et une borne d'entrée positive recevant un second potentiel de référence (V₂) issu d'une première alimentation,
un premier commutateur électronique (14) possédant un premier contact fixe (14a) relié de façon à recevoir ledit signal d'entrée et un second contact fixe (14b) relié de façon à recevoir ledit premier potentiel de référence, et possédant un contact de commande (14d) relié pour recevoir le signal de sortie dudit premier comparateur différentiel, ledit premier commutateur fournissant de façon sélective ledit signal d'entrée ou ledit premier potentiel de référence,
un second commutateur électronique (15) possédant un premier contact fixe (15a) couplé de façon à recevoir ledit signal d'entrée et un second contact fixe (15b) relié de façon à recevoir ledit second potentiel de référence et possédant un contact de commande (15b) couplé de façon à recevoir la sortie dudit second comparateur différentiel, ledit second commutateur fournissant de façon sélective ledit signal d'entrée ou ledit second potentiel de référence, et
un additionneur (16) relié aux contacts de sortie (14c, 15c) desdits premier et second commutateurs électroniques.

2. Circuit de détection de forme d'onde selon la revendication 1 dans lequel
lesdits premier et second potentiels de référence sont de polarités positive et négative, respectivement, et égales l'une à l'autre en valeur absolue.

3. Circuit de détection de forme d'onde selon la revendication 1, dans lequel
ledit premier commutateur électronique (14) sélectionne ledit signal d'entrée durant la période pendant laquelle ledit signal d'entrée est supérieur audit premier potentiel de référence et sinon, sélectionne ledit premier potentiel de référence, et
ledit second commutateur électronique (15) sélectionne ledit signal d'entrée durant la période pendant laquelle ledit signal d'entrée est inférieur audit second potentiel de référence et sinon, sélectionne ledit second potentiel de référence.
